# EUROPÄISCHE PATENTSCHRIFT

(11) **EP 2 337 978 B1**
(45) Veröffentlichungstag und Bekanntmachung des Hinweises auf die Patenterteilung: **12.03.2014**
(21) Anmeldenummer: 09783574.8
(22) Anmeldetag: 30.09.2009
(51) Int. Cl.: F16H 61/14, E02F 9/22

(54) **VERFAHREN ZUM BETREIBEN DER WANDLERÜBERBRÜCKUNGSKUPPLUNG IN EINEM LASTSCHALTGETRIEBE EINER ARBEITSMASCHINE UMFASSEND ZUMINDEST EINE HYDRAULISCH BETÄTIGBARE HUBEINRICHTUNG**
METHOD FOR OPERATING THE TORQUE CONVERTER LOCK-UP CLUTCH IN A POWER TRANSMISSION OF A MOBILE MACHINE COMPRISING AT LEAST ONE HYDRAULICALLY ACTUATED LIFTING DEVICE
PROCÉDÉ D'UTILISATION DE L'EMBRAYAGE DE PONTAGE DE CONVERTISSEUR DANS UNE BOÎTE COUPLABLE SOUS CHARGE D'UNE MACHINE DE TRAVAIL COMPORTANT AU MOINS UN DISPOSITIF DE LEVAGE À ACTIONNEMENT HYDRAULIQUE

(30) Priorität: 23.10.2008 DE 102008043106
(43) Veröffentlichungstag der Anmeldung: 29.06.2011
(73) Patentinhaber: ZF Friedrichshafen AG, 88038 Friedrichshafen (DE)
(72) Erfinder: HÖFLER, Hans, 88090 Immenstaad (DE); KURZ, Thomas, 88085 Langenargen (DE)
(86) Internationale Anmeldenummer: PCT/EP2009/062651
(87) Internationale Veröffentlichungsnummer: WO 2010/046214

(56) Entgegenhaltungen:
- WO-A1-2006/011832
- FR-A1- 2 557 518
- US-A- 4 246 997
- US-B1- 6 234 254

## Beschreibung

Die vorliegende Erfindung bezieht sich auf ein Verfahren zum Betreiben der Wandlerüberbrückungskupplung in einem Lastschaltgetriebe einer Arbeitsmaschine umfassend zumindest eine hydraulisch betätigbare Hubeinrichtung gemäß dem Oberbegriff des Patentanspruchs 1.

Zur Reduzierung der Verlustleitung in einem hydrodynamischen Drehmomentwandler wird nach dem Stand der Technik bei Lastschaltgetrieben eine Wandlerüberbrückungskupplung eingesetzt, durch die das Turbinenrad des Wandlers mit dem Pumpenrad verbindbar ist. Bei geschlossener Wandlerüberbrückungskupplung entsteht eine verlustlose Antriebsverbindung zwischen dem Antriebsmotor und dem Getriebe des Fahrzeugs.

Bei bisher bekannten Anwendungen bei Arbeitsmaschinen, wie beispielsweise bei Dumper, Grader und Kranfahrzeugen erfolgt das Schließen und Öffnen der Wandlerüberbrückungskupplung in Abhängigkeit der Turbinendrehzahl unter Berücksichtigung der Wandlerkennlinie. Hierbei wird eine offene Wandlerüberbrückungskupplung im Schließsinne betätigt, wenn die Turbinendrehzahl einen Schwellenwert überschreitet, bei dem das Turbinendrehmoment bei geschlossener und offener Wandlerüberbrückungskupplung gleich groß ist. Nach dem Stand der Technik wird eine geschlossene Wandlerüberbrückungskupplung im Öffnungssinne betätigt, wenn die Turbinendrehzahl einen Schwellenwert unterschreitet, bei dem das Turbinendrehmoment bei geschlossener und offener Wandlerüberbrückungskupplung gleich groß ist. Diese Schaltpunkte werden durch die Drehzahldifferenz zwischen der Turbine und der Pumpe ermittelt.

Bei Arbeitsmaschinen wie Radlader; Gabelstapler, Baggerlader, Telehandler etc. umfassend hydraulisch betätigbare Hubeinrichtungen, bei denen kurze Arbeitszyklen gefahren werden und dabei eine Aufteilung der Leistung des Verbrennungsmotors zwischen der Arbeitshydraulik und dem Fahrantrieb erfolgt, erweist sich die Steuerung der Wandlerüberbrückungskupplung über die Turbinendrehzahl als nachteilig. Insbesondere bei einem Ladezyklus, beispielsweise bei einem Rad- oder Baggerlader, kann durch diese Vorgehensweise der Schließpunkt der Wandlerüberbrückungskupplung genau dann erreicht werden, wenn der Fahrer das Fahrzeug vor einem LKW verzögern möchte, was darin resultiert, dass das Fahrzeug durch das Schließen der Wandlerüberbrückungskupplung in nachteiliger Weise beschleunigt. Ferner kann diese Vorgehensweise bei Betätigung der Hydraulik bei geschlossener Wandlerüberbrückungskupplung dazu führen, dass bedingt durch die geringe Motordrehzahl zu wenig Leistung an der Hydraulik ansteht. Der gleiche Nachteil entsteht auch bei Gabelstaplern bei der Betätigung der Hubeinheit.

Bei einem typischen Ladezyklus eines Radladers wird die Hydraulik zum Senken der Schaufel beim Einfahren in den Hauben und zum Heben der Schaufel beim Heranfahren an einen LKW betätigt. Hierbei wird eine hohe Motordrehzahl benötigt, um der Arbeitshydraulik ausreichend Leistung zur Verfügung zu stellen. Bei geschlossener Wandlerüberbrückungskupplung ergibt sich eine niedrige Motordrehzahl, wodurch der Arbeitshydraulik im Vergleich zu den Betriebsbedingungen mit offener Wandlerüberbrückungskupplung zu wenig Leistung zur Verfügung gestellt wird.

Aus dem Stand der Technik ist bekannt, bei Radladern umfassend eine Wandlerüberbrückungskupplung in den unteren Gängen ein Schließen der Wandlerüberbrückungskupplung zu verhindern.

Demnach ist eine optimale Nutzung der Wandlerüberbrückungskupplung in Arbeitsmaschinen mit kurzen Arbeitszyklen bei geringen Fahrgeschwindigkeiten zur Kraftstoffersparnis nicht möglich.

Aus der DE 33 47 256 C2 ist eine Steuereinrichtung für Wandlerüberbrückungskupplung eines hydrodynamischen Drehmomentwandlers im Antriebsstrang eines Zugfahrzeuges, insbesondere eines landwirtschaftlich nutzbaren Schleppers mit einer Brennkraftmaschine als Antriebsquelle, einer Schaltkupplung und einem Schaltgetriebe bekannt, wobei zum Antrieb von Arbeitsgeräten eine mit der Kurbelwelle des Antriebsmotors direkt proportional umlaufende Nebenantriebswelle vorgegehen ist.

Die Wandlerüberbrückungskupplung wird nach Erreichen einer oberen Schaltdrehzahl selbsttätig geschlossen und bei einer unteren Schaltdrehzahl geöffnet, wobei das Schließen und Öffnen der Wandlerüberbrückungskupplung mittels einer mit Eingängen für die Drehzahl des Turbinenrades des Drehmomentwandlers und die Drehzahl der Zapfwelle versehenen Schaltung erfolgt, welche in Abhängigkeit von vorgegebenen Werten der oberen Schaltdrehzahl und unteren Schaltdrehzahl sowie der Mindestarbeitsdrehzahl und der Höchstarbeitsdrehzahl der eingeschalteten Zapfwelle ein Steuersignal für das Steuerventil des Drehmomentwandlers bildet.

Dadurch soll ein effektiver Zapfwellen- bzw. Nebenabtriebsbetrieb bei geringen Verlustleistungen des Wandlers gewährleistet werden.

Der vorliegenden Erfindung liegt die Aufgabe zugrunde, ein Verfahren zum Betreiben der Wandlerüberbrückungskupplung in einem Lastschaltgetriebe einer Arbeitsmaschine umfassend zumindest eine hydraulisch betätigbare Hubeinrichtung anzugeben, durch dessen Durchführung der Hubhydraulik der Hubeinrichtungen ausreichend Leistung zur Verfügung gestellt wird, wobei die Verlustleistung des Wandlers möglichst gering gehalten werden soll.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Verfahren zum Betreiben der Wandlerüberbrückungskupplung vorgeschlagen, im Rahmen dessen die Wandlerüberbrückungskupplung im Öffnungssinne betätigt wird, wenn ein vorgegebener Grenzwert der Position der Hubhydraulik der zumindest einen hydraulisch betätigbare Hubeinrichtung überschritten wird, wobei bei Unterschreiten eines vorgegebenen Grenzwertes der Position der Hubhydraulik die Wandlerüberbrückungskupplung wieder geschlossen wird, wenn die Turbinendrehzahl einen vorgegebenen Schwellenwert überschreibet.

Vorzugsweise wird bei Unterschreiten eines vorgegebenen Grenzwertes der Position der Hubhydraulik die Wandlerüberbrückungskupplung wieder geschlossen wird, wenn die Turbinendrehzahl einen Schwellenwert überschreitet., bei dem das Turbinendrehmoment bei geschlossener und offener Wandlerüberbrückungskupplung gleich groß ist.

Beispielsweise kann bei einem Radlader die Höhe der Schaufel und bei einem Gabelstapler die Höhe des Hubwerkes als Position der Hubhydraulik im Sinne der Erfindung dienen. Das Überschreiten eines vorgegebenen Wertes für die Position der Hubhydraulik kann über einen Positionssensor ermittelt werden, wobei als Positionssensor ein Drehwinkelsensor an einem Gelenk oder ein Wegsensor am Hydraulikzylinder der Hubhydraulik dienen kann.

Um bei einer Bergabfahrt mit geschlossener Wandlerüberbrückungskupplung die Motorbremswirkung zu erholten, kann gemäß einer Weiterbildung der Erfindung vorgegehen sein, dass die Wandlerüberbrückungskupplung bei Überschreiten des vorgegebenen Grenzwertes der Position der Hubhydraulik nur dann geöffnet wird, wenn die Geschwindigkeit des Fahrzeugs einen Schwellenwert unterschreitet oder wenn das Getriebeeingangsmoment einen vorgegebenen Schwellenwert überschreitet.

Vorzugsweise werden die Eingangssignale bezüglich der Position der Hubhydraulik, der Turbinen- und Motordrehzahl sowie des Motormomentes durch eine Getriebeelektronik ausgewertet, welche das Öffnen und Schließen der Wandlerüberbrückungskupplung steuert.

## Patentansprüche

1. Verfahren zum Betreiben der Wandlerüberbrückungskupplung in einem Lastschaltgetriebe einer Arbeitsmaschine umfassend zumindest eine hydraulisch betätigbare Hubeinrichtung, **dadurch gekennzeichnet, dass** die Wandlerüberbrückungskupplung im Öffnungssinne betätigt wird, wenn ein vorgegebener Grenzwert der Position der Hubhydraulik der zumindest einen Hubeinrichtung überschritten wird, wobei bei Unterschreiten eines vorgegebenen Grenzwertes der Position der Hubhydraulik die Wandlerüberbrückungskupplung geschlossen wird, wenn die Turbinendrehzahl einen vorgegebenen Schwellenwert überschreitet.

2. Verfahren zum Betreiben der Wandlerüberbrückungskupplung in einem Lastschaltgetriebe einer Arbeitsmaschine, nach Anspruch 1, **dadurch gekennzeichnet, dass** bei Unterschreiten eines vorgegebenen Grenzwertes der Position der Hubhydraulik die Wandlerüberbrückungskupplung geschlossen wird, wenn die Turbinendrehzahl einen Schwellenwert überschreitet, bei dem das Turbinendrehmoment bei geschlossener und offener Wandlerüberbrückungskupplung gleich groß ist.

3. Verfahren zum Betreiben der Wandlerüberbrückungskupplung in einem Lastschaltgetriebe einer Arbeitsmaschine, nach Anspruch 1 oder 2, dadurch **gekennzeichet,** dass bei Bergabfahrt mit geschlossener Wandlerüberbrückungskupplung die Wandlerüberbrückungskupplung bei Überschreiten des vorgegebenen Grenzwertes der Position der Hubhydraulik nur dann geöffnet wird, wenn die Geschwindigkeit des Fahrzeugs einen Schwellenwert unterschreitet oder wenn das Getriebeeingangsmoment einen vorgegebenen Schwellenwert überschreitet.

4. Verfahren zum Betreiben der Wandlerüberbrückungskupplung in einem Lastschaltgetriebe einer Arbeitsmaschine, nach Anspruch 1, 2 oder 3, dadurch **gekenntzeichnet,** dass die Eingangssignale bezüglich der Position der Hubhydraulik, der Turbinen- und Motordrehzahl und des Motormomentes durch eine Getriebeelektronik ausgewertet werden, welche das Öffnen und Schließen der Wandlerüberbrückungskupplung steuert.

## Claims

1. Method for operating the torque converter lock-up clutch in a power-shift transmission of a machine comprising at least one hydraulically actuated lifting device, **characterized in that** the torque converter lock-up clutch is activated in the opening direction if a predefined limiting value of the position of the lifting hydraulics of the at least one lifting device is exceeded, wherein when a predefined limiting value of the position of the lifting hydraulics is undershot the torque converter lock-up clutch is closed if the turbine rotational speed exceeds a predefined threshold value.

2. Method for operating the torque converter lock-up clutch in a power-shift transmission of a machine according to Claim 1, **characterized in that** when a predefined limiting value of the position of the lifting hydraulics is undershot the torque converter lock-up clutch is closed if the turbine rotational speed exceeds a threshold value at which the turbine torque is of equal magnitude when the torque converter lock-up clutch is closed and when the torque converter lock-up clutch is open.

3. Method for operating the torque converter lock-up clutch in a power-shift transmission of a machine according to Claim 1 or 2, **characterized in that** when travelling downhill with a closed torque converter lock-up clutch the torque converter lock-up clutch is opened when the predefined limiting value of the position of the lifting hydraulics is exceeded only if the speed of the vehicle undershoots a threshold value or if the transmission input torque exceeds a predefined threshold value.

4. Method for operating the torque converter lock-up clutch in a power-shift transmission of a machine according to Claim 1, 2 or 3, **characterized in that** the input signals are evaluated with respect to the position of the lifting hydraulics, the turbine rotational speed and engine rotational speed and the engine torque by transmission electronics which control the opening and closing of the torque converter lock-up clutch.

## Revendications

1. Procédé de fonctionnement de l'accouplement à pontage de convertisseur dans une boîte de vitesses commandée en charge d'une machine de travail, comprenant au moins un dispositif de levage pouvant être actionné hydrauliquement, **caractérisé en ce que** l'accouplement à pontage de convertisseur est actionné dans le sens de l'ouverture lorsqu'une valeur limite prédéfinie de la position de l'hydraulique de levage de l'au moins un dispositif de levage est dépassée, l'accouplement à pontage de convertisseur étant fermé en cas de franchissement vers le bas d'une valeur limite prédéfinie de la position de l'hydraulique de levage lorsque la vitesse de rotation de la turbine dépasse une valeur de seuil prédéfinie.

2. Procédé de fonctionnement de l'accouplement à pontage de convertisseur dans une boîte de vitesses commandée en charge d'une machine de travail selon la revendication 1, **caractérisé en ce qu'**en cas de franchissement vers le bas d'une valeur limite prédéfinie de la position de l'hydraulique de levage, l'accouplement à pontage de convertisseur est fermé lorsque la vitesse de rotation de la turbine dépasse une valeur de seuil à laquelle le couple de la turbine est de même valeur avec l'accouplement à pontage de convertisseur fermé et ouvert.

3. Procédé de fonctionnement de l'accouplement à pontage de convertisseur dans une boîte de vitesses commandée en charge d'une machine de travail selon la revendication 1 ou 2, **caractérisé en ce que** lors de la descente d'une pente avec l'accouplement à pontage de convertisseur fermé, l'accouplement à pontage de convertisseur n'est ouvert en cas de dépassement de la valeur limite prédéfinie de la position de l'hydraulique de levage que si la vitesse du véhicule devient inférieure à une valeur de seuil ou lorsque le couple d'entrée de la boîte de vitesses dépasse une valeur de seuil prédéfinie.

4. Procédé de fonctionnement de l'accouplement à pontage de convertisseur dans une boîte de vitesses commandée en charge d'une machine de travail selon la revendication 1, 2 ou 3, **caractérisé en ce que** les signaux d'entrée en rapport avec la position de l'hydraulique de levage, la vitesse de rotation de la turbine et du moteur et le couple du moteur sont interprétés par une électronique de boîte de vitesses qui commande l'ouverture et la fermeture de l'accouplement à pontage de convertisseur.
